(19) Europäisches Patentamt
European Patent Office
Office européen des brevets

(11) **EP 2 003 303 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
***F02B 23/06*** *(2006.01)*

(21) Anmeldenummer: **07110322.0**

(22) Anmeldetag: **15.06.2007**

(54) **Kolben mit Kolbenmulde für eine Brennkraftmaschine und Verfahren zur Gemischbildung unter Verwendung einer Einspritzeinrichtung und eines derartigen Kolbens**

Piston with a piston bowl for a combustion engine and method for fuel-mixture generation using an injection device and such a piston

Piston doté d'une cavité pour un moteur à combustion interne et procédé destiné à la formation d'un mélange en utilisant un dispositif de vaporisation et un tel piston

(84) Benannte Vertragsstaaten:
**DE FR GB**

(43) Veröffentlichungstag der Anmeldung:
**17.12.2008 Patentblatt 2008/51**

(73) Patentinhaber: **Ford Global Technologies, LLC Dearborn, MI 48126 (US)**

(72) Erfinder:
• **Nitsche, Thomas**
  **41464 Neuss (DE)**
• **Roettger, Daniel**
  **4731, Eynatten (BE)**
• **Conée, Claudia**
  **52074, Aachen (DE)**
• **Willems, Werner**
  **52078, Aachen (DE)**
• **Wunderlich, Frank**
  **52134, Herzogenrath (DE)**
• **Kraemer, Frank**
  **53819, Neunkirchen-Seelscheid (DE)**

(74) Vertreter: **Drömer, Hans-Carsten Henry-Ford Str. 1 50725 Köln (DE)**

(56) Entgegenhaltungen:
**EP-A- 1 264 973      WO-A-03/010423**
**US-B1- 6 997 158**

**Beschreibung**

Die Erfindung betrifft einen Kolben mit Kolbenboden und im Kolbenboden vorgesehener Kolbenmulde, insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse translatorisch bewegbar ist und bei dem die Kolbenmulde - zur Ausbildung einer omegaförmigen Grundform - einen konkaven Bereich aufweist, wobei die der Kolbenlängsachse zugewandte Muldenoberfläche der omegaförmigen Kolbenmulde einen im wesentlichen zylinderförmigen Teilbereich aufweist, der entlang der Kolbenlängsachse ausgerichtet ist und unter Ausbildung eines konvexen Muldenrandes in den Kolbenboden übergeht.

Des Weiteren betrifft die Erfindung ein Verfahren zur Bildung eines Kraftstoff-Luft-Gemisches unter Verwendung einer Einspritzeinrichtung und eines Kolbens der oben genannten Art, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden des Kolbens und ein Zylinderrohr mitbegrenzt wird.

Der Marktanteil kleiner schnelllaufender Dieselmotoren wächst stetig. Die Gründe hierfür liegen einerseits in dem niedrigen Kraftstoffverbrauch und andererseits im vergleichsweise guten Leistungsangebot moderner Dieselmotoren der jüngeren Generationen. Der geringe Kraftstoffverbrauch resultiert unter anderem aus einem hohen Verdichtungsverhältnis und geringen Ladungswechselverlusten aufgrund der Qualitätsregelung des Dieselmotors.

Nachteilig an herkömmlichen dieselmotorischen Verfahren sind insbesondere die - aufgrund der prozeßbedingten hohen Temperaturen - hohen Stickoxidemissionen ($NO_x$).

Bei Dieselmotoren, die mit einem Luftüberschuß betrieben werden, insbesondere direkteinspritzenden Dieselmotoren, können die im Abgas befindlichen Stickoxide prinzipbedingt - d. h. aufgrund der fehlenden Reduktionsmittel - nicht ohne zusätzliche Maßnahmen reduziert werden. Zur Reduzierung der Stickoxide werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet.

Grundsätzlich kann den Stickoxiden auch mit sogenannten Stickoxidspeicherkatalysatoren entgegengetreten werden. Dabei werden die Stickoxide zunächst während einer Speicherphase im Katalysator gesammelt, um dann während einer Regenerationsphase mittels eines unterstöchiometrischen Betriebs (beispielsweise $\lambda < 0{,}95$) der Brennkraftmaschine reduziert zu werden. Speicherkatalysatoren setzen aber - zur Vermeidung hoher Rußemissionen - die Verbrennung eines homogenen Gemisches voraus, weshalb sie zwar für magerbetriebene Ottomotoren, aber insbesondere nicht für direkteinspritzende Dieselmotoren geeignet sind.

Auch wenn eine Reduzierung der Stickoxidemissionen mit Hilfe der Abgasnachbehandlung grundsätzlich möglich ist, erfordern die immer strengeren gesetzlichen Grenzwerte bezüglich der Schadstoffemissionen von Kraftfahrzeugen immer voluminösere Abgasnachbehandlungssysteme. Zur Einhaltung zukünftiger Grenzwerte könnte dabei ein Volumen des Abgasnachbehandlungssystems erforderlich werden, das ein Vielfaches des Hubraums der Brennkraftmaschine erreicht.

Dies führt nicht nur zu Problemen beim Pakkaging, sondern auch zu ungünstigen Randbedingungen nach einem Kaltstart der Brennkraftmaschine, da die thermische Trägheit des Abgassystems bedingt durch die größere Masse d. h. das höhere Gewicht zunimmt, so daß sich die Warmlaufphase verlängert. Des weiteren verursacht die größere Menge an Edelmetall zur Beschichtung des Abgasnachbehandlungssystems höhere Kosten.

Das zuvor Gesagte macht deutlich, daß - zur Einhaltung zukünftiger Grenzwerte - der Bildung von Stickoxiden bereits während der Verbrennung entgegen gewirkt werden muß, um die Stickoxid-Rohemissionen (engine-out-emissions) zu reduzieren.

Eine aus dem Stand der Technik bekannte innermotorische Maßnahme zur Verringerung der Stickoxidemissionen besteht darin, die Verbrennungstemperaturen, insbesondere die Prozeßspitzentemperaturen, zu senken. Mit sinkenden Prozeßtemperaturen nimmt auch die Bildung von Stickoxiden ab.

Niedrigere Prozeßtemperaturen können beispielsweise durch die Rückführung heißen Abgases (AGR) und/oder eine Ladeluftkühlung realisiert werden.

Ein weiterer Nachteil des direkteinspritzenden dieselmotorischen Verfahrens sind die Rußemissionen infolge der Inhomogenität des Kraftstoff-Luft-Gemisches.

Bei herkömmlichen direkteinspritzenden Dieselmotoren wird gegen Ende der Kompressionsphase Kraftstoff in die im Brennraum befindliche Luft eingespritzt. Für die Einspritzung des Kraftstoffes, die Gemischaufbereitung, nämlich die Durchmischung von Luft und Kraftstoff und die Aufbereitung des Kraftstoffes im Rahmen von Vorreaktionen einschließlich der Verdampfung, sowie der Selbstzündung des aufbereiteten Gemisches und der Verbrennung stehen bei kleinen schnelllaufenden Dieselmotoren nur sehr kurze Zeiträume in der Größenordnung von Millisekunden zur Verfügung. Infolgedessen liegt in der Regel während der Zündung und Verbrennung ein sehr inhomogenes Kraftstoff-Luft-Gemisch vor, welches nicht durch ein einheitliches Luftverhältnis charakterisiert ist, sondern sowohl sehr magere Gemischteile als auch sehr fette Gemischteile aufweist.

Dabei wird in Bereichen des Gemisches mit einem unterstöchiometrischen lokalen Luftverhältnis ($\lambda <$ 1) und bei Temperaturen oberhalb 1500°K unter extremen Luftmangel Ruß gebildet.

Zur Minimierung der Emission von Rußpartikeln werden nach dem Stand der Technik sogenannte regenerierbare Partikelfilter eingesetzt, die die Rußpartikel aus dem Abgas herausfiltern und speichern, wobei diese Rußpartikel im Rahmen der Regeneration des Filters intermittierend verbrannt werden.

In der Regel werden möglichst lange Regenerationsintervalle angestrebt, was zu größeren Filtervolumen und folglich zu ähnlichen Problemen führt wie bereits weiter oben für die Abgasnachbehandlung der Stickoxide ausgeführt wurde.

Zur Einhaltung zukünftiger Grenzwerte der Bildung von Ruß bereits während der Verbrennung entgegen gewirkt werden muß, was durch einen ausreichend großen Luftüberschuß und eine optimierte Gemischbildung mit einer möglichst weitgehenden Homogenisierung erreicht werden kann.

Bei herkömmlichen Dieselmotoren lassen sich die Partikelemissionen und die Stickoxidemissionen nicht gleichzeitig durch innermotorische Maßnahmen reduzieren.

Mit dem Ziel, der Bildung von Schadstoffen bereits bei der Verbrennung entgegen zu wirken, werden zunehmend neue Brennverfahren entwickelt und untersucht. Häufig sind dies Hybrid-Brennverfahren, die darauf ausgerichtet sind, die Vorteile des dieselmotorischen Verfahrens mit den Vorteilen des ottomotorischen Verfahrens zu verbinden. Dabei konzentrieren sich die Entwicklungsarbeiten in erster Linie auf die wesentlichen Merkmale der beiden Verfahren.

Das ottomotorische Verfahren ist dabei gekennzeichnet durch eine Gemischverdichtung, ein homogenes Gemisch, eine Fremdzündung, sowie die Quantitätsregelung, wohingegen das dieselmotorische Verfahren charakterisiert ist durch eine Luftverdichtung, ein inhomogenes Gemisch, eine Selbstzündung und die Qualitätsregelung.

Die Entwicklungsarbeiten konzentrieren sich zunehmend auf die sogenannten LTC-Verfahren (Low Temperature Combustion), da diese Verfahren aufgrund ihrer niedrigen Prozeßtemperaturen geeignet erscheinen, der Entstehung von Stickoxiden schon bei der Verbrennung spürbar entgegenzuwirken und auf diese Weise die Stickoxidemissionen der Brennkraftmaschine zu verringern.

Ein Hybrid-Brennverfahren, das durch niedrige Prozeßtemperaturen gekennzeichnet ist und ein Beispiel für ein LTC-Verfahren darstellt, ist das sogenannte HCCI-Verfahren. Im Vergleich zu herkömmlichen dieselmotorischen Verfahren erweist sich das HCCI-Verfahren im Hinblick auf die kritischen Schadstoffemissionen, nämlich Ruß und $NO_x$, als wesentlich günstiger. Das HCCI-Verfahren (**H**omogenous-**C**harge **C**ompression-**I**gnition) wird auch als CAI-Verfahren (**C**ontrolled **A**uto-**I**gnition) bezeichnet und basiert auf einer kontrollierten Selbstzündung des dem Zylinder zugeführten Kraftstoffes.

Dabei wird der Kraftstoff unter Luftüberschuß - also überstöchiometrisch - verbrannt. Der im mageren Bereich betriebene Dieselmotor weist aufgrund des stark verdünnten homogenisierten Kraftstoff-Luft-Gemisches und der damit verbundenen niedrigen Verbrennungstemperaturen vergleichsweise geringe Stickoxidemissionen ($NO_x$) auf und ebenfalls infolge des mageren homogenisierten Gemisches nahezu keine Rußemissionen.

Der thermische Wirkungsgrad des HCCI-Verfahrens ist hoch, da das homogenisierte Gemisch volumetrisch verbrennt, d. h. sich keine Diffusionsflamme durch den Brennraum fortpflanzt, sondern im gesamten Brennraum nahezu gleichzeitig bei konstantem Volumen gezündet und verbrannt wird.

Das HCCI-Verfahren und eine Brennkraftmaschine, die dieses Verfahren zur Verbrennung des Kraftstoffes verwendet, werden in der US 6,390,054 B1 beschrieben, wobei die Brennkraftmaschine ein Ottomotor ist, so daß nicht sämtliche in der US 6,390,054 B1 gemachten Ausführungen auf den hier maßgeblichen Dieselmotor übertragbar sind.

Dies liegt insbesondere darin begründet, daß die Eigenschaften von Benzin einerseits und Dieselkraftstoff andererseits doch zu unterschiedlich sind. So ist Dieselkraftstoff im Vergleich zu Benzin leichter entzündbar, weshalb eine sichere Selbstzündung in der Regel gegeben ist und Fehlzündungen und Zündaussetzer beim Dieselmotor eher unerheblich sind. Andererseits ist der Zeitpunkt der Selbstzündung bzw. der Zündverzug schwerer zu steuern, wohingegen Dieselkraftstoff nicht so leicht zu verdampfen ist wie Ottokraftstoff, was hohe Anforderungen an die Gemischaufbereitung stellt.

Trotz des sehr günstigen Emissionsverhaltens weist das dieselmotorische HCCI-Verfahren auch Nachteile auf, die denen des ottomotorischen HCCI-Verfahrens ähnlich sind.

Der wesentliche Nachteil des HCCI-Verfahrens besteht darin, daß dieses Verfahren nicht in sämtlichen Betriebspunkten einer Brennkraftmaschine eingesetzt werden kann, so daß sich die - oben bereits beschriebenen - Vorteile nur in einem kleinen Bereich des Motorkennfeldes (Last über Drehzahl) nutzen lassen.

Dies ist auch der Grund dafür, daß nach dem Stand der Technik eine Brennkraftmaschine nicht ausschließlich nach dem HCCI-Verfahren betrieben werden kann, sondern grundsätzlich ein Hybrid-Antrieb erforderlich ist d. h. eine Brennkraftmaschine, welche einen Betrieb in zwei unterschiedlichen Betriebsmodi ermöglicht, um die Brennkraftmaschine in den Betriebspunkten, in denen das HCCI-Verfahren versagt, trotzdem betreiben zu können. Neben dem HCCI-Verfahren kommt dabei ein konventionelles dieselmotorisches Verfahren zum Einsatz, bei dem sich nach der Selbstzündung eine Diffusionsflamme im Brennraum ausbreitet.

Das HCCI-Verfahren kann insbesondere nicht bei hohen Lasten und hohen Drehzahlen eingesetzt werden. Die Beschränkungen in der Anwendung des HCCI-Verfahrens ergeben sich dabei grundsätzlich aus der Steuerung des Zündzeitpunktes d.h. der Selbstzündung und der Steuerung der Brenngeschwindigkeit d. h. des Brennverlaufs. Die Selbstzündung und die Brenngeschwindigkeit reagieren sehr empfindlich auf Änderungen in der Temperatur der Zylinderladung, Änderungen im Luftverhältnis und Drehzahländerungen.

Mit zunehmender Last wird die Selbstzündung infolge des abnehmenden Luftverhältnisses nach früh verschoben d. h. das Kraftstoff-Luftgemisch zündet in der Kompressionsphase zu einem früheren Zeitpunkt, wobei die Umsatzraten bzw. die Brenngeschwindigkeit ebenfalls zunehmen. Infolge der weit vor dem oberen Totpunkt (OT) freigesetzten Verbrennungswärme sinkt der thermische Wirkungsgrad. Wird diesem Effekt durch ein Verschieben des Einspritzzeitpunktes nach spät entgegengewirkt, ist dies nur bedingt zielführend, da hierdurch auch die Gemischaufbereitung, insbesondere die Homogenisierung, nachteilig beeinträchtigt wird.

Mit zunehmender Drehzahl wird die Zeit, die zur Aufbereitung des Kraftstoff-Luftgemisches im Rahmen von Vorreaktionen zur Verfügung gestellt wird, verkürzt, so daß bei hohen Drehzahlen der Schwerpunkt der Verbrennung nach spät verschoben wird, wodurch sich der thermische Wirkungsgrad des Verbrennungsprozesses verschlechtert.

Um den Bereich im Motorenkennfeld, in dem das HCCI-Verfahren angewendet werden kann, hin zu höheren Lasten und Drehzahlen auszudehnen d. h. zu vergrößern, müssen Maßnahmen ergriffen werden, welche eine bessere Steuerung der Selbstzündung und eine verbesserte Homogenisierung des Kraftstoff-Luft-Gemisches auch bei hohen Drehzahlen gestatten. Zielführend können hierbei neue Verfahren zur Gemischbildung und neuartige Kolben bzw. Kolbenformen sein. Ein Beispiel eines solchen ist durch Dokument gegebenen.

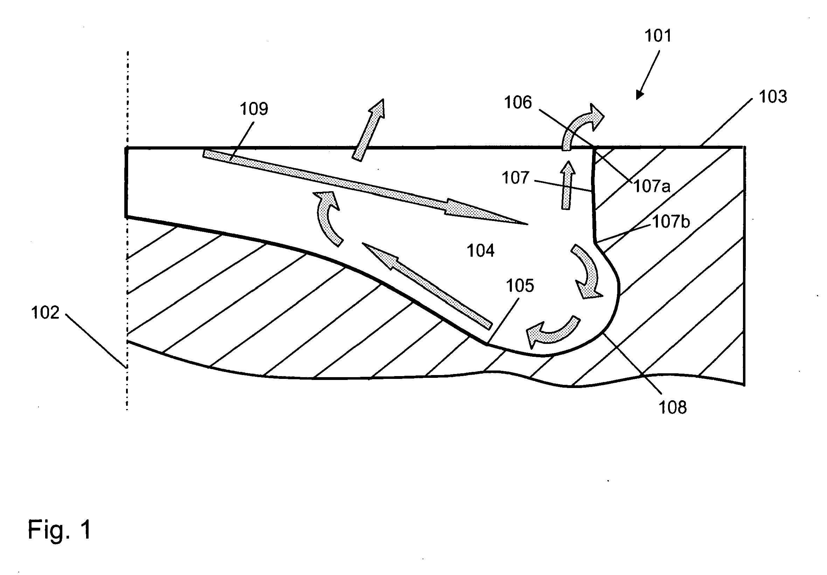

Die Kolbenmulde 104 eines herkömmlichen Kolbens 101 hat gemäß Figur 1 einen konkaven Bereich 108, der zur Ausbildung der omegaförmigen Grundform der Kolbenmulde 104 dient, wobei die der Kolbenlängsachse 102 zugewandte Muldenoberfläche 105 einen im wesentlichen zylinderförmigen Teilbereich 107 aufweist, der entlang der Kolbenlängsachse 102 ausgerichtet ist und unter Ausbildung eines konvexen Muldenrandes 106 in den Kolbenboden 103 übergeht.

Dabei weist die der Kolbenlängsachse 102 zugewandte Muldenoberfläche 105 zwei konvexe Teilbereiche 107a, 107b auf, von denen der erste Teilbereich 107a den Muldenrand 106 ausbildet. Der zweite Teilbereich 107b wird beim Übergang vom konkaven Bereich 108 zum im wesentlichen zylinderförmigen Bereich 107 ausgebildet und ragt in die Kolbenmulde 104 hin.

Bei einem herkömmlichen Kolben 101 der beschriebenen Art mit konventioneller Muldenform 104 wird der Kraftstoff gemäß Figur 1 in der Weise eingespritzt, daß die Einspritzstrahlen 109 auf den zweiten konvexen Teilbereich 107b gelenkt werden, wobei die einzelnen Einspritzstrahlen 109 beim Auftreffen auf die Muldenoberfläche 105 in mehrere divergierende Kraftstoff Teilstrahlen aufgespalten, teilweise aus der Kolbenmulde 104 heraus beschleunigt und teilweise umgelenkt werden. Der Kraftstoff vermischt sich weiträumig mit der im Brennraum befindlichen Luft, so daß eine gute Luftausnutzung gewährleistet ist.

Die Aufsplittung des Einspritzstrahles in mehrere Teilstrahlen und das Beschleunigen dieser Teilstrahlen aus der Kolbenmulde heraus unter Ausnutzung der kinetischen Energie des eingespritzten Kraftstoffes unterstützt dabei grundsätzlich die Gemischaufbereitung d. h. auch die Homogenisierung des Gemisches im Rahmen eines LTC-Verfahrens.

Nachteilig an diesem herkömmlichen Verfahren zur Gemischbildung ist aber, daß sich infolge der sehr dynamischen Verteilung des Kraftstoffes im Brennraum und aufgrund eines Strömungsabrisses am Muldenrand Turbulenzen im Kraftstoff-Luft-Gemisch ergeben d. h. ausbilden, insbesondere im Bereich des Muldenrands beim Übergang in die Quetschzone, wodurch in wenigen, örtlich eng begrenzten Bereichen des Brennraums die Gemischbildung so weit voranschreitet, daß lokal die Bedingungen für eine Selbstzündung vorliegen, wohingegen in weiten Bereichen des Brennraums noch ein sehr inhomogenes Gemisch vorliegt. Aus diesem Grund wird die Selbstzündung früher eingeleitet als dies, insbesondere hinsichtlich eines guten Emissionsverhaltens der Brennkraftmaschine, erwünscht ist. Vorteilhafter wäre es, den Zündverzug zu vergrößern d. h. später zu zünden und das Gemisch vor Einleitung der Selbstzündung weiter zu homogenisieren.

Vor diesem Hintergrund ist es die Aufgabe der vorliegenden Erfindung, einen Kolben gemäß dem Oberbegriff des Anspruches 1 d. h. der gattungsbildenden Art bereitzustellen, mit dem die aus dem Stand der Technik bekannten Probleme überwunden werden und der insbesondere eine verbesserte Steuerung der kontrollierten Selbstzündung ermöglicht, wodurch der Anwendungsbereich von LTC-Verfahren hin zu höheren Drehzahlen und höheren Lasten erweitert wird.

Eine weitere Teilaufgabe der vorliegenden Erfindung ist es, ein Verfahren zur Bildung eines Kraftstoff-Luft-Gemisches unter Verwendung einer Einspritzeinrichtung und eines derartigen Kolbens aufzuzeigen.

Gelöst wird die erste Teilaufgabe durch einen Kolben mit Kolbenboden und im Kolbenboden vorgesehener Kolbenmulde, insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse translatorisch bewegbar ist und bei dem die Kolbenmulde - zur Ausbildung einer omegaförmigen Grundform - einen konkaven Bereich aufweist, wobei die der Kolbenlängsachse zugewandte Muldenoberfläche der omegaförmigen Kolbenmulde einen im wesentlichen zylinderförmigen Teilbereich aufweist, der entlang der Kolbenlängsachse ausgerichtet ist und unter Ausbildung eines konvexen Muldenrandes in den Kolbenboden übergeht, und der dadurch gekennzeichnet, daß

■ der im wesentlichen zylinderförmige Teilbereich eine Höhe $T_2$ aufweist mit $T_2 \geq 0.025\ d$, und
■ der konvexe Muldenrand einen Krümmungsradius $r_2$ aufweist mit $r_2 \leq 0.006\ d$, wobei d den Kolbendurchmesser angibt.

Der konvexe Muldenrand des erfindungsgemäßen Kolbens weist einen im Vergleich zum Stand der Technik verkleinerten Krümmungsradius $r_2$ auf. Der maximale Krümmungsradius $r_2$ ist nicht größer als 0.006 d, wobei d den Kolbendurchmesser angibt. Vorzugsweise gilt $r_2 \leq 0.0035\ d$ bzw. $r_2 \leq 0.0025\ d$. Je kleiner der Krümmungsradius $r_2$ gewählt wird, desto ausgeprägter ist die Ausbildung von Turbulenzen d. h. die Auffächerung der Kraftstoff-Luft-Strömung beim Übergang von der Kolbenmulde zum Kolbenboden in Richtung Zylinderkopf d. h. im Bereich des Muldenrandes.

Im Gegensatz zu einem Kolben mit herkömmlicher Muldengeometrie d. h. herkömmlich ausgebildetem und deutlich abgerundetem Muldenrand, bei dem der Strömungsabriß am Muldenrand im Rahmen der Gemischbildung - aufgrund der hier noch ungewollten Ausbildung von Turbulenzen - als nachteilig angesehen wird, weil dies zu einer unkontrollierten und verfrühten Selbstzündung führt, bevor eine ausreichende Homogenisierung des Gemisches stattgefunden hat, wird beim erfindungsgemäßen Kolben der Krümmungsradius des Muldenrandes bewußt d. h. gezielt verkleinert d. h. klein gewählt, um gerade - die nach dem Stand der Technik unerwünschten - Turbulenzen zu provozieren bzw. zu generieren.

Anders als beim Stand der Technik erweist sich diese Vorgehensweise zusammen mit dem erfindungsgemäßen Gemischbildungsverfahren, welches noch weiter unten beschrieben wird, als zielführend bei der Lösung der Aufgabe, nämlich die Selbstzündung des Kraftstoff-Luft-Gemisches besser kontrollieren zu wollen, insbesondere einer verfrühten Selbstzündung entgegenwirken zu wollen.

Erfindungsgemäß wird der Kraftstoff nämlich tangential zur Muldenoberfläche eingespritzt. Die Kraftstoff-Luft-Strömung wird dabei erst gegen Ende der Gemischbildung aufgeteilt d. h. aufgefächert. Zunächst durchströmt der eingespritzte Kraftstoff den gesamten konkaven Bereich, strömt entlang des im wesentlichen zylinderförmigen Bereichs in Richtung Kolbenboden und wird dann unter Ausbildung von Turbulenzen am Muldenrand aufgefächert.

Die Ausbildung von Turbulenzen erfolgt somit nicht - wie nach dem Stand der Technik - unmittelbar nach dem Auftreffen der Einspritzstrahlen auf die Muldenoberfläche d. h. in der Anfangsphase der Gemischbildung, was durch die kurze Wegstrecke vom Auftreffpunkt zum Muldenrand hin bedingt ist, sondern gegen Ende der Gemischbildung d. h. nachdem bereits eine weiträumige Verteilung des Kraftstoffes im Brennraum stattgefunden hat, somit eine gute Luftausnutzung gewährleistet ist und die Homogenisierung des Kraftstoff-Luft-Gemisches weit vorangeschritten ist.

Auf diese Weise werden bei Verwendung eines erfindungsgemäßen Kolbens gegen Ende der Gemischbildung gezielt Turbulenzen ausgebildet, um die Aufbereitung des Kraftstoff-Luft-Gemisches zu beschleunigen und die Selbstzündung zu unterstützen. Hingegen wird die Gemischbildung - im Vergleich zum Stand der Technik - anfangs durch die Vermeidung von Turbulenzen verzögert.

Dadurch, daß die Kraftstoff- bzw. Kraftstoff-Luft-Strömung über einen weiten Bereich an der Muldenoberfläche anliegt und eine Ablösung verhindert wird, können Turbulenzen und folglich eine verfrühte unkontrollierte Selbstzündung verhindert werden.

Zusätzlich wird den Teilen des Kraftstoff-Luft-Gemisches, welche wandgeführt werden, über die Muldenoberfläche Wärme durch Konvektion entzogen, so daß die Gemischaufbereitung in den für die Selbstzündung relevanten Gemischbereichen verlangsamt wird, wodurch ebenfalls eine unerwünschte vorzeitige Selbstzündung verhindert wird.

Bei der Verwendung eines erfindungsgemäßen Kolbens wird somit deutlich mehr Zeit für die Gemischaufbereitung bereitgestellt, wodurch der Zündverzug vergrößert wird. Infolgedessen liegt bei der Selbstzündung ein besser aufbereitetes Gemisch, insbesondere ein besser homogenisiertes Kraftstoff-Luft-Gemisch vor.

Das Emissionsverhalten der Brennkraftmaschine wird verbessert. Die Stickoxidemissionen und Rußemissionen werden reduziert. Zudem kann das Anwendungsgebiet der sogenannten LTC-Verfahren hin zu höheren Lasten und höheren Drehzahlen ausgedehnt werden, da die Selbstzündung besser steuerbar d. h. leichter zu kontrollieren ist.

Dadurch wird die erste der Erfindung zugrunde liegende Aufgabe gelöst, nämlich einen Kolben bereitzustellen, der eine verbesserte Steuerung der kontrollierten Selbstzündung ermöglicht und die Anwendung von LTC-Verfahren hin zu höheren Drehzahlen und höheren Lasten ermöglicht. Die Vorteile des LTC-Verfahrens können damit in einem weiteren Bereich des Motorkennfeldes genutzt werden, wodurch die Stickoxidemissionen und Rußemissionen reduziert werden.

Während die Gemischbildung bei Verwendung eines herkömmlichen Kolbens eher strahlgeführt ist, erfolgt die Mischung des Kraftstoffes mit der Verbrennungsluft bei Einsatz eines erfindungsgemäßen Kolbens vorwiegend wandgeführt.

Beim wandgeführten Verfahren wird der Kraftstoff in der Art in den Brennraum eingespritzt, daß der Einspritzstrahl gezielt auf eine den Brennraum begrenzende Wand gerichtet wird, vorzugsweise in die im Kolbenboden vorgesehene Mulde. Die den Brennraum begrenzenden Wände werden dabei gezielt zur Gemischbildung genutzt. Vorliegend dient die Muldenoberfläche zur Führung der Kraftstoff-Luft-Strömung und Verteilung des Kraftstoffes im Brennraum.

Beim strahlgeführten Verfahren erfolgt der Gemischtransport im wesentlichen durch den Impuls des Einspritzstrahls, wobei die kinetische Energie des Einspritzstrahls genutzt wird. Im Vergleich zu dem zuvor beschriebenen wandgeführten Verfahren ist dabei die Ausdehnung der aufbereiteten Kraftstoff-Luft-Gemischwolke vor Einleitung der Selbstzündung sehr begrenzt.

Eine klare Abgrenzung der beiden Verfahren ist aber nicht möglich. In der Regel verfügen Verfahren zur Gemischbildung über eine wandgeführte und eine strahlgeführte Komponente, wobei häufig eine Komponente dominiert, wie vorstehend dargelegt.

Vorteilhaft sind Ausführungsformen des Kolbens, bei denen der im wesentlichen zylinderförmige Teilbereich eine Höhe $T_2$ aufweist mit $T_2 \geq 0.0265\,d$, vorzugsweise mit $0.0277\,d \leq T_2 \leq 0.03\,d$, wobei d den Kolbendurchmesser angibt.

Der zylinderförmige Teilbereich lenkt einen Teilstrom des an der Muldenoberfläche entlang geführten Kraftstoff-Luft-Gemisches wieder - d. h. nach Durchströmen des konkaven Bereichs - parallel zur Kolbenlängsachse. Zusammen mit dem Anstellwinkel $\alpha_2$, auf den weiter unten noch eingegangen werden wird, kann durch die Wahl einer geeigneten Höhe $T_2$ Einfluß genommen werden auf die Größe bzw. das Größenverhältnis der relevanten Teilströme, nämlich einerseits des Teilstroms, der in Richtung Kolbenlängsachse gelenkt wird, und andererseits des Teilstroms, der parallel zur Kolbenlängsachse geführt wird. Dadurch läßt sich die Größe der Gemischanteile beeinflussen, welche in Richtung der äußeren bzw. inneren Quetschzone gelenkt werden.

Weitere Vorteile des erfindungsgemäßen Kolbens werden im Zusammenhang mit den Ausführungsformen gemäß den Unteransprüchen erörtert.

Vorteilhaft sind Ausführungsformen des Kolbens, bei denen die Muldenoberfläche der Kolbenmulde zwischen dem konkaven Bereich und dem im wesentlichen zylinderförmigen Teilbereich einen kegelstumpfförmigen Teilbereich aufweist.

Vorteilhaft sind dabei Ausführungsformen des Kolbens, bei denen der kegelstumpfförmige Teilbereich entlang der Kolbenlängsachse ausgerichtet ist und die durch diesen kegelstumpfförmigen Teilbereich ausgebildete Muldenoberfläche mit der Kolbenlängsachse einen Winkel $\alpha_2$ bildet, wobei gilt $\alpha_2 \leq 23°$, vorzugsweise $\alpha_2 \leq 17°$.

Die durch den konkaven Bereich hindurchgeführte Kraftstoff-Luft-Strömung wird beim Durchströmen des kegelstumpfförmigen Teilbereichs beschleunigt. Je größer der Neigungswinkel des Kegelstumpfes gewählt wird, desto ausgeprägter ist diese Beschleunigung, da mit zunehmendem Winkel der Strömungsquerschnitt, welcher der Kraftstoff-Luft-Strömung zur Verfügung steht, verkleinert wird, was durch eine Erhöhung der Strömungsgeschwindigkeit kompensiert wird.

Vorteilhaft sind Ausführungsformen des Kolbens, bei denen der konkave Bereich zumindest teilweise einen Krümmungsradius $r_1$ aufweist mit $0.045\,d \leq r_1 \leq 0.078\,d$, vorzugsweise mit $0.055\,d \leq r_1 \leq 0.068\,d$, wobei d den Kolbendurchmesser angibt.

Der Krümmungsradius $r_1$ beeinflußt die Interaktion zwischen der Muldenoberfläche und der Kraftstoff-Luft-Strömung und damit beispielsweise den Wärmeübergang infolge Konvektion, auf den noch weiter unten eingegangen wird. Je kleiner der Krümmungsradius $r_1$ des konkaven Bereichs gewählt wird, desto ausgeprägter ist die Umlenkung der wandgeführten Kraftstoff-Luft-Strömung.

Wird beabsichtigt, den Impuls des Einspritzstrahls möglichst wenig durch die Umlenkung im konkaven Bereich zu reduzieren, um eine schnelle Durchmischung und zufriedenstellende Kraftstoffaufteilung am Muldenaustritt zu erreichen, ist ein möglichst großer Radius zielführend.

Vorteilhaft sind Ausführungsformen des Kolbens, bei denen die Muldenoberfläche ausgehend vom konkaven Bereich in Richtung Kolbenlängsachse unter Verringerung der Muldentiefe ansteigt. Diese Ausbildung der Muldenoberfläche - zwischen dem konkaven Bereich und der Kolbenlängsachse - trägt dem Umstand Rechnung, daß der Öffnungswinkel $\gamma$ des Einspritzstrahls deutlich kleiner ist als 180° und die Einspritzstrahlen im wesentlichen tangential zur Muldenoberfläche verlaufen sollen, um eine Wandführung der Strömung zu gewährleisten.

Vorteilhaft sind dabei Ausführungsformen des Kolbens, bei denen die Muldenoberfläche zumindest in einem Teilbereich geradlinig unter Ausbildung eines Winkels $\alpha_1$ mit der Kolbenlängsachse ansteigt, wobei gilt $60° \leq \alpha_1 \leq 80°$, vorzugsweise $65° \leq \alpha_1 \leq 75°$.

Der beanspruchte Winkelbereich korrespondiert mit dem Öffnungswinkel $\gamma$, der zu bevorzugen ist, nämlich $105° \leq \gamma \leq 130°$ bzw. $115° \leq \gamma \leq 120°$, so daß der bzw. die Einspritzstrahlen leicht angestellt zur Muldenoberfläche bzw. im wesentlichen tangential zur Brennraumwand verlaufen. Die geradlinige Ausbildung des Anstiegs - zumindest in einem Teilbereich des in Rede stehenden Muldenbereichs - entspricht der geradlinigen Ausdehnung bzw. Erstreckung der Einspritzstrahlen.

Vorzugsweise knickt der Anstieg der Muldenoberfläche zur Kolbenmitte hin ab, wobei die Muldenoberfläche mit der Kolbenlängsachse einen rechten Winkel bildet und folglich in der Mitte der Mulde ein ebenes Plateau entsteht.

Vorteilhaft sind dabei Ausführungsformen des Kolbens, bei denen die Kolbenmulde einen maximalen Durchmesser $D_1$ aufweist mit $0.54\,d \leq D_1 \leq 0.84\,d$, vorzugsweise mit $0.64\,d \leq D_1 \leq 0.74\,d$, wobei d den Kolbendurchmesser angibt und der maximale Durchmesser im Bereich des konkaven Bereichs vorliegt.

Damit verfügt die Mulde des erfindungsgemäßen Kolbens über einen größeren maximalen Durchmes-

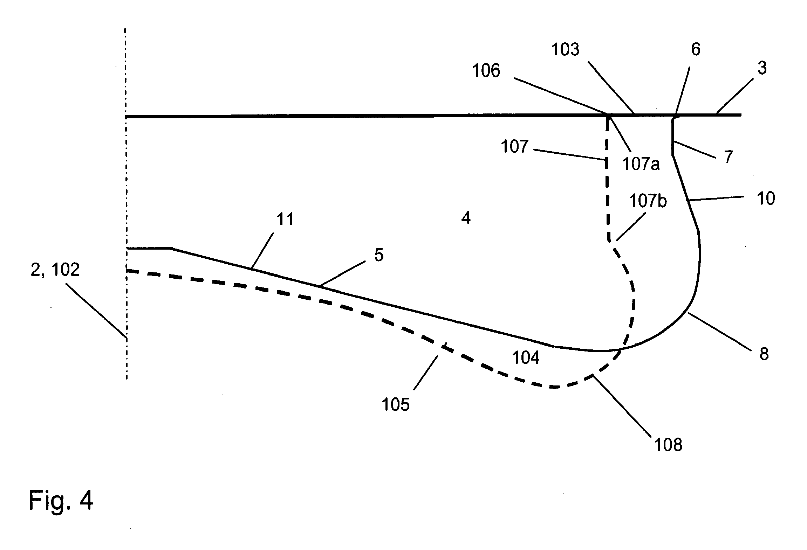

ser $D_1$ als die Mulde eines herkömmlichen Kolbens (siehe auch Figur 4). Ein größerer Durchmesser gewährleistet eine weiträumige Verteilung des Kraftstoffes im Brennraum und eine gute Luftausnutzung, insbesondere bei hohen Lasten d.h. großen Kraftstoffmengen.

Je größer der Durchmesser $D_1$ gewählt wird, desto weiter ist der Weg, den der Kraftstoff von der Einspritzeinrichtung bis hin zum Muldenrand zurückzulegen hat.

Vorteilhaft sind Ausführungsformen des Kolbens, bei denen die Kolbenmulde eine maximale Tiefe $T_1$ aufweist mit $0.1\,d \leq T_1 \leq 0.18\,d$, vorzugsweise mit $0.12\,d \leq T_1 \leq 0.15\,d$, wobei d den Kolbendurchmesser angibt

Durch eine geeignete Wahl der Tiefe $T_1$ kann Einfluß genommen werden auf die Wegstrecke, welche der Kraftstoff bis zum Erreichen des Muldenrandes zurückzulegen hat.

Eine geringe Tiefe $T_1$ führt zu einer Verkürzung dieser Wegstrecke, wohingegen eine Vergrößerung der Tiefe $T_1$ zu einer Vergrößerung der Wegstrecke und damit zu einer Vergrößerung des Zündverzuges führt.

Damit verfügt der erfindungsgemäße Kolben über eine Mulde mit einer geringeren maximalen Tiefe $T_1$ als ein herkömmlicher Kolben, wobei die Mulde mittig vorzugsweise auch weniger tief ist d.h. eine geringere minimale Tiefe aufweist (siehe auch Figur 4).

Trotz der geringeren maximalen Tiefe $T_1$ der Mulde ist der Zündverzug größer als bei Verwendung eines herkömmlichen Kolbens, da der erfindungsgemäße Kolben der Kraftstoff-Luft-Strömung von Hause aus eine längere wandführende Wegstrecke bereitstellt.

Die Ausführungen bezüglich der Geometrie der Kolbenmulde, insbesondere hinsichtlich des Durchmessers $D_1$, des Winkels $\alpha_2$ und der maximalen Muldentiefe $T_1$, machen deutlich, daß gezielt Einfluß genommen wird auf die Strömungsgeschwindigkeit und die Länge der Wegstrecke der wandgeführten Kraftstoff-Luft-Strömung und damit letztendlich auf den Zeitpunkt der Selbstzündung.

Dabei stehen die einzelnen geometrischen Größen in einer Wechselbeziehung zueinander, so daß sich Synergieeffekte ergeben können. Insbesondere können sich die erzielten Effekte durch eine geeignete Dimensionierung der geometrischen Parameter verstärken oder aber abschwächen.

Die zweite der Erfindung zugrundeliegende Teilaufgabe wird gelöst durch ein Verfahren zur Bildung eines Kraftstoff Luft-Gemisches unter Verwendung einer Einspritzeinrichtung und eines Kolbens der zuvor beschriebenen Art, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden des Kolbens und ein Zylinderrohr mitbegrenzt wird, und das dadurch gekennzeichnet ist, daß

■ mittels der Einspritzeinrichtung ein kegelförmiger Einspritzstrahl ausgebildet wird, der einen Öffnungswinkel $\gamma$ aufweist mit $105° \leq \gamma \leq 130°$, und

■ der Einspritzzeitpunkt mindestens einer Einspritzung in der Art gewählt wird, daß der Einspritzstrahl im wesentlichen tangential auf den Bereich der Muldenoberfläche, der zwischen dem konkaven Bereich und der Kolbenlängsachse angeordnet ist, gelenkt wird.

Das bereits für den erfindungsgemäßen Kolben Gesagte gilt auch für das erfindungsgemäße Verfahren.

Vorteilhaft sind Verfahrensvarianten, bei denen der kegelförmige Einspritzstrahl einen Öffnungswinkel $\gamma$ aufweist mit $115° \leq \gamma \leq 120°$.

Im Rahmen der vorliegenden Erfindung wird als Einspritzstrahl die Summe der durch die Einspritzeinrichtung bzw. die Düsenöffnungen der Einspritzdüse eingespritzten Kraftstoffstrahlen bezeichnet, so daß der Begriff "kegelförmiger Einspritzstrahl" den durch die Kraftstoffstrahlen aufgespannten Kegel kennzeichnet.

Im Vergleich zum Stand der Technik, gemäß dem Öffnungswinkel von 155° bis 160° bevorzugt werden, wird bei dem erfindungsgemäßen Gemischbildungsverfahren ein verkleinerter Öffnungswinkel $\gamma$ verwendet. Dadurch treffen die Kraftstoffstrahlen nicht auf den Muldenrand, sondern werden im wesentlichen tangential zur Muldenoberfläche am Muldengrund geführt.

Die Wahl d.h. die erfindungsgemäß kleine Dimensionierung des Öffnungswinkels $\gamma$ führt somit zu einem wandgeführten Gemischbildungsverfahren.

LTC-Verfahren einerseits und traditionelle dieselmotorische Verfahren andererseits stellen unterschiedliche Anforderungen an die Einspritzung. Das traditionelle dieselmotorische Verfahren erfordert zur besseren Luftausnutzung einen weiten Einspritzstrahl, so daß zur Vermeidung einer Ölverdünnung und zur Vermeidung hoher Emissionen an unverbrannten Kohlenwasserstoffen spät - in der Nähe des oberen Totpunktes (OT) - eingespritzt werden sollte.

Hingegen kann beispielsweise beim HCCI-Verfahren eine frühe Einspritzung zur Unterstützung der Homogenisierung des Gemisches sinnvoll sein. Zusammen mit einem weiten Einspritzstrahl würde dies aber dazu führen, daß der eingespritzte Kraftstoff teilweise auf die Zylinderrohrinnenwand trifft, was Nachteile hat, insbesondere eine zunehmende Ölverdünnung, aber auch erhöhte Emissionen an unverbrannten Kohlenwasserstoffen.

Der - entsprechend dem erfindungsgemäßen Verfahren gewählte - Öffnungswinkel ist im Vergleich zu den traditionellen dieselmotorischen Verfahren verengt. Dadurch können Einspritzungen auch beabstandet vom oberen Totpunkt (OT) vorgenommen werden, ohne daß eine Benetzung der Zylinderrohrinnenwand mit Kraftstoff zu befürchten ist und zwar sowohl in der Expansionsphase als auch in der Kompressionsphase.

Der erfindungsgemäß vorgeschlagene Öffnungswinkel unterstützt damit HCCI-Verfahren, welche eine sehr frühe Einspritzung vor OT bzw. eine sehr späte Einspritzung nach OT erfordern.

Gleichzeitig wird dadurch aber nicht die Gemischbildung im Rahmen des traditionellen dieselmotorischen Verfahrens bei hohen Drehzahlen und hohen Lasten verschlechtert. Denn obwohl der Öffnungswinkel γ kleiner ist und der Einspritzstrahl nicht den gesamten Brennraum erfaßt, kann eine schnelle Durchmischung des eingespritzten Kraftstoffes mit den verdichteten Gasen sichergestellt werden.

Das erfindungsgemäße Verfahren zur Gemischbildung ermöglicht einen Betrieb der Brennkraftmaschine sowohl nach dem herkömmlichen dieselmotorischen Verfahren als auch nach einem LTC-Verfahren, so daß in Abhängigkeit vom jeweiligen Betriebspunkt der Brennkraftmaschine im Motorkennfeld entweder das LTC-Verfahren oder das traditionelle dieselmotorische Verfahren zum Einsatz kommen kann.

Darüber hinaus sind auch Mischformen möglich, bei denen der in den Zylinder eingespritzte Kraftstoff teilweise als homogenisierte Ladung kontrolliert selbst zündet (LTC-Verfahren) und teilweise nach dem traditionellen Verfahren - kontrolliert mittels Diffusionsflamme - als inhomogenes Gemisch verbrannt wird.

Vorteilhaft sind des weiteren Verfahrensvarianten, bei denen eine Einspritzdüse als Einspritzeinrichtung verwendet wird, wobei die Einspritzdüse vorzugsweise mittig und entlang der Kolbenlängsachse ausgerichtet angeordnet ist.

Vorteilhaft sind Ausführungsformen des Verfahrens, bei denen der eingespritzte Kraftstoff vor dem Auftreffen auf die Muldenoberfläche weitestgehend verdampft wird. Dadurch wird verhindert, daß die Muldenoberfläche mit flüssigem Kraftstoff benetzt wird, was die Emission an unverbrannten Kohlenwasserstoffen (HC) und Ruß und signifikant erhöhen würde und somit im Hinblick auf eine gutes Emissionsverhalten zu vermeiden ist.

Vorteilhaft sind Ausführungsformen des Verfahrens, bei denen im Rahmen eines Ladungswechsels eine Rückführung von Abgas (AGR) in den Brennraum der Brennkraftmaschine vorgenommen wird mit einer AGR-Rate bis zu 65%. Dabei wird das Abgas vorzugsweise gekühlt zurückgeführt.

Die Abgasrückführrate $x_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Im Rahmen des LTC-Verfahrens werden wesentlich höhere AGR-Raten als beim herkömmlichen dieselmotorischen Verfahren realisiert. Selbst für späte Einspritzzeitpunkte kann bei niedrigen Drehzahlen und kleinen Kraftstoffmengen eine hohe Homogenisierung des Gemisches gewährleistet werden.

Durch das zurückgeführte Abgas wird der Sauerstoffgehalt reduziert, der Zündverzug vergrößert und die Selbstzündung des Dieselkraftstoffes nach spät verschoben. Sowohl die Stickoxid- als auch die Rußemissionen werden gesenkt.

Vorteilhaft sind Ausführungsformen des Verfahrens, bei denen im Rahmen eines Ladungswechsels im Brennraum der Brennkraftmaschine ein Drall ausgebildet wird mit einer Drallzahl DZ, für die gilt: 0.5 ≤ DZ ≤ 1.5, vorzugsweise mit 0.8 d ≤ DZ ≤ 1.2.

Die Drallzahl DZ ergibt sich dabei aus dem Verhältnis der Winkelgeschwindigkeit der Zylinderinnenströmung und der Winkelgeschwindigkeit der Kurbelwelle. Bei dieser Verfahrensvariante wird die Gemischbildung - wie bei einem luftgeführten Brennverfahren - zusätzlich durch die Bewegung der Verbrennungsluft im Brennraum unterstützt.

Beim luftgeführten Brennverfahren wird versucht, eine Ladungsbewegung im Brennraum beim Ansaugen der Luft zu erzeugen, um auf diese Weise eine gute Durchmischung der angesaugten Luft und des direkt eingespritzten Kraftstoffes zu erzielen. Dabei wird eine möglichst weiträumige Verteilung des Kraftstoffes im gesamten Brennraum angestrebt.

Insbesondere bei hohen Drehzahlen, bei denen nur wenig Zeit zur Gemischaufbereitung zur Verfügung steht, und höheren Lasten d. h. größeren, im Brennraum zu verteilenden Kraftstoffmengen fördert die Ladungsbewegung die Homogenisierung des Kraftstoff-Luft-Gemisches.

Ein Drall ist definitionsgemäß ein Luftwirbel um eine gedachte Achse, welche parallel zur Kolben- bzw. Zylinderlängsachse verläuft, im Gegensatz zu einem Tumble, der einen Luftwirbel darstellt, dessen Achse senkrecht zur Kolbenlängsachse verläuft.

Vorteilhaft sind Ausführungsformen des Verfahrens, bei denen zur Ausbildung des kegelförmigen Einspritzstrahls fünf bis zehn Teilstrahlen verwendet werden.

Im folgenden wird die Erfindung anhand eines Ausführungsbeispieles gemäß den Figuren 1 bis 4 näher beschrieben. Hierbei zeigt:

Fig.1     schematisch einen herkömmlichen Kolben mit konventioneller Muldenform im Halbschnitt entlang der Kolbenlängsachse zusammen mit einem Einspritzstrahl und den ausgebildeten Kraftstoff-Luft-Strömungen,

Fig. 2    schematisch die Mulde einer ersten Ausführungsform des Kolbens im Halbschnitt entlang der Kolbenlängsachse,

Fig. 3    schematisch die erste Ausführungsform des Kolbens im Halbschnitt entlang der Kolbenlängsachse zusammen mit einem Einspritzstrahl und den ausgebildeten Kraftstoff-Luft-Strömungen, und

Fig. 4 schematisch im Halbschnitt entlang der Kolbenlängsachse die in Figur 1 dargestellte Kolbenmulde zusammen mit der in Figur 2 dargestellten Mulde.

Figur 1 wurde bereits im Zusammenhang mit dem Stand der Technik beschrieben.

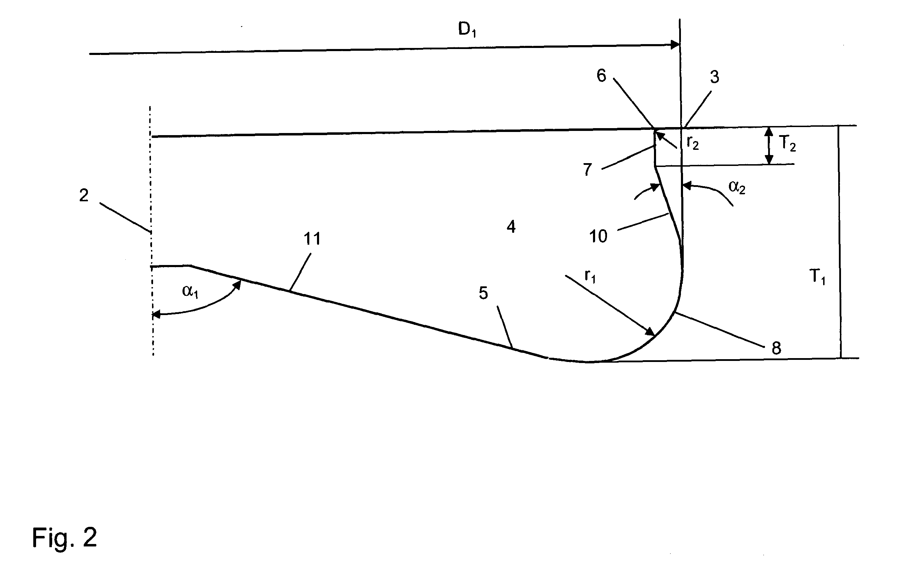

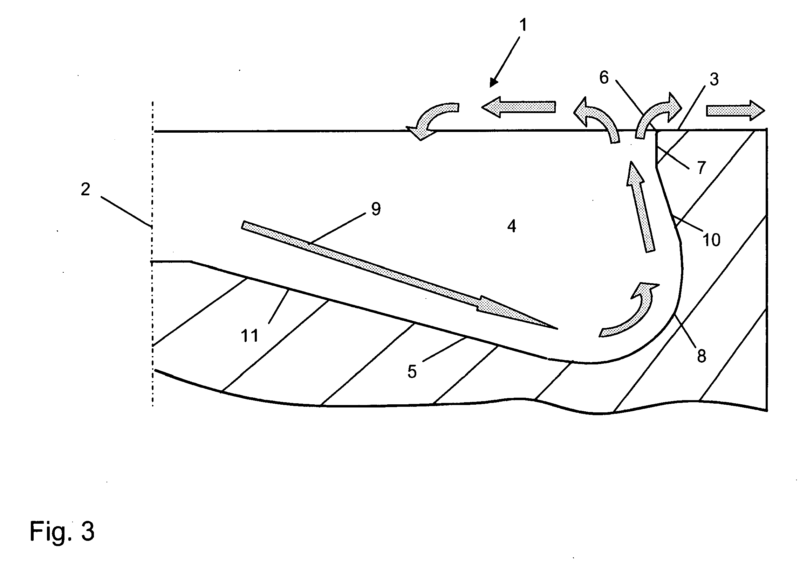

Figur 2 zeigt schematisch die Mulde 4 einer ersten Ausführungsform des Kolbens im Halbschnitt entlang der Kolbenlängsachse 2. In Figur 3 sind ein Einspritzstrahl 9 und die sich in der Mulde 4 dieser ersten Ausführungsform des Kolbens 1 ausbildenden Strömungen illustriert.

Wie in den Figuren 2 und 3 dargestellt, weist die im Kolbenboden 3 vorgesehene Mulde 4 zur Ausbildung einer omegaförmigen Grundform einen konkaven Bereich 8 auf. Ausgehend von diesem konkaven Bereich 8 steigt die Muldenoberfläche 5 hin zur Kolbenlängsachse 2 unter Verringerung der Muldentiefe an, wobei die Muldenoberfläche 5 in einem Teilbereich geradlinig unter Ausbildung eines Winkels $\alpha_1$ mit der Kolbenlängsachse 2 ansteigt. In der Kolbenmitte bzw. Muldenmitte bildet die Muldenoberfläche 5 mit der Kolbenlängsachse 2 einen rechten Winkel und in der Mitte der Mulde 4 ein ebenes Plateau.

Der Anstieg 11 korrespondiert mit dem Öffnungswinkel $\gamma$ der Einspritzeinrichtung bzw. der Ausrichtung des Einspritzstrahls 9, so daß der eingespritzte Kraftstoffstrahl 9 im wesentlichen tangential zur Muldenoberfläche 5 verläuft.

An den konkaven Bereich 8 schließt sich ein kegelstumpfförmiger Teilbereich 10 an, der in einen zylinderförmigen Teilbereich 7 übergeht, welcher entlang der Kolbenlängsachse 2 ausgerichtet ist und unter Ausbildung eines konvexen Muldenrandes 6 in den Kolbenboden 3 übergeht. Die Höhe des zylinderförmigen Teilbereichs 7 ist mit $T_2$ bezeichnet.

Der kegelstumpfförmige Teilbereich 10 ist ebenfalls entlang der Kolbenlängsachse 2 ausgerichtet, wobei die durch den kegelstumpfförmigen Teilbereich 10 ausgebildete Muldenoberfläche 5 mit der Kolbenlängsachse 2 einen Winkel $\alpha_2$ bildet.

Die durch den konkaven Bereich 8 hindurchgeführte Kraftstoff-Luft-Strömung wird beim Durchströmen des kegelstumpfförmigen Teilbereichs 10 beschleunigt, in den zylinderförmigen Teilbereich 7 überführt und in Richtung Zylinderkopf gelenkt (siehe Figur 3).

Der Muldenrand 6 ist durch einen vergleichsweise kleinen Krümmungsradius $r_2$ gekennzeichnet, so daß beim Übergang zum Kolbenboden 3 Turbulenzen ausgebildet werden, was die Gemischaufbereitung beschleunigt und eine Selbstzündung unterstützt.

Die Kolbenmulde 5 hat einen maximalen Durchmesser $D_1$ im konkaven Bereich 8 und eine maximale Tiefe $T_1$ ebenfalls im konkaven Bereich 8 (siehe Figur 2).

Damit verfügt die Mulde 4 über eine geringere maximale Tiefe $T_1$ und einen größeren maximalen Durchmesser $D_1$ als eine herkömmliche Mulde 104 nach dem Stand der Technik (siehe auch Figur 4).

Figur 4 zeigt schematisch im Halbschnitt entlang der Kolbenlängsachsen 2, 102 die in Figur 1 dargestellte herkömmliche Mulde 104 (gestrichelte Linie) zusammen mit der in Figur 2 dargestellten Kolbenmulde 4 (durchgezogenen Linie).

**Bezugszeichen**

1 Kolben
2 Kolbenlängsachse
3 Kolbenboden
4 Kolbenmulde
5 Muldenoberfläche
6 Muldenrand
7 zylinderförmiger Teilbereich
8 konkaver Bereich
9 Einspritzstrahl
10 kegelstumpfförmiger Teilbereich
11 Anstieg

101 Kolben
102 Kolbenlängsachse
103 Kolbenboden
104 Kolbenmulde
105 Muldenoberfläche
106 Muldenrand
107 zylinderförmiger Teilbereich
107a erster konvexer Teilbereich
107b zweiter konvexer Teilbereich
108 konkaver Bereich
109 Einspritzstrahl

$\alpha_1$ Steigungswinkel
$\alpha_2$ Winkel des kegelstumpfförmigen Teilbereichs mit der Kolbenlängsachse
$\gamma$ Öffnungswinkel des Einspritzstrahls
d Kolbendurchmesser
$D_1$ maximaler Muldendurchmesser
OT oberer Totpunkt

$r_1$ Krümmungsradius des konkaven Bereichs
$r_2$ Krümmungsradius des konvexen Muldenrandes
$T_1$ maximale Muldentiefe
$T_2$ Höhe des zylinderförmigen Teilbereichs
$X_{AGR}$ Abgasrückführrate

**Patentansprüche**

1.  Kolben (1) mit Kolbenboden (3) und im Kolbenboden (3) vorgesehener Kolbenmulde (4), insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse (2) translatorisch bewegbar ist und bei dem die Kolbenmulde (4) - zur Ausbildung einer omegaförmigen Grundform - einen konkaven Bereich (8) aufweist, wobei

    - die der Kolbenlängsachse (2) zugewandte Muldenoberfläche (5) der omegaförmigen Kolbenmulde (4) einen im wesentlichen zylinderförmigen Teilbereich (7) aufweist, der entlang der Kolbenlängsachse (2) ausgerichtet ist, unter Ausbildung eines konvexen Muldenrandes (6) in den Kolbenboden (3) übergeht und eine Höhe $T_2$ aufweist mit $T_2 \geq 0.025\ d$, wobei d den Kolbendurchmesser angibt, und
    - der konvexe Muldenrand (6) einen Krümmungsradius $r_2$ aufweist mit $r_2 \leq 0.006\ d$, wobei d den Kolbendurchmesser angibt.
    **dadurch gekennzeichnet, daß**
    - die Muldenoberfläche (5) der Kolbenmulde (4) zwischen dem konkaven Bereich (8) und dem im wesentlichen zylinderförmigen Teilbereich (7) einen kegelstumpfförmigen Teilbereich (10) aufweist, wobei dieser kegelstumpfförmige Teilbereich (10) entlang der Kolbenlängsachse (2) ausgerichtet ist und die durch diesen kegelstumpfförmigen Teilbereich (10) ausgebildete Muldenoberfläche (5) mit der Kolbenlängsachse (2) einen Winkel $\alpha_2$ bildet mit $\alpha_2 \leq 23°$.

2.  Kolben (1) nach Anspruch 1,
    **dadurch gekennzeichnet, daß**
    der im wesentlichen zylinderförmige Teilbereich (7) eine Höhe $T_2$ aufweist mit $T_2 \geq 0.0265\ d$, vorzugsweise mit $0.0277\ d \leq T_2 \leq 0.03\ d$, wobei d den Kolbendurchmesser angibt.

3.  Kolben (1) nach Anspruch 1 oder 2,
    **dadurch gekennzeichnet, daß**
    für den Winkel $\alpha_2$ gilt: $\alpha_2 \leq 17°$.

4.  Kolben (1) nach einem der vorherigen Ansprüche,
    **dadurch gekennzeichnet, daß**
    der konkave Bereich (8) zumindest teilweise einen Krümmungsradius $r_1$ aufweist mit $0.045\ d \leq r_1 \leq 0.078\ d$, vorzugsweise mit $0.055\ d \leq r_1 \leq 0.068\ d$, wobei d den Kolbendurchmesser angibt.

5.  Kolben (1) nach einem der vorherigen Ansprüche,
    **dadurch gekennzeichnet, daß**
    die Muldenoberfläche (5) ausgehend vom konkaven Bereich (8) in Richtung Kolbenlängsachse (2) unter Verringerung der Muldentiefe ansteigt.

6.  Kolben (1) nach Anspruch 5,
    **dadurch gekennzeichnet, daß**
    die Muldenoberfläche (5) zumindest in einem Teilbereich geradlinig unter Ausbildung eines Winkels $\alpha_1$ mit der Kolbenlängsachse (2) ansteigt, wobei gilt $60° \leq \alpha_1 \leq 80°$, vorzugsweise $65° \leq \alpha_1 \leq 75°$.

7.  Kolben (1) nach einem der vorherigen Ansprüche,
    **dadurch gekennzeichnet, daß**
    die Kolbenmulde (4) einen maximalen Durchmesser $D_1$ aufweist mit $0.54\ d \leq D_1 \leq 0.84\ d$, vorzugsweise mit $0.64\ d \leq D_1 \leq 0.74\ d$, wobei d den Kolbendurchmesser angibt und der maximale Durchmesser im Bereich des konkaven Bereichs (8) vorliegt.

8.  Kolben (1) nach einem der vorherigen Ansprüche,
    **dadurch gekennzeichnet, daß**
    die Kolbenmulde (4) eine maximale Tiefe $T_1$ aufweist mit $0.1\ d \leq T_1 \leq 0.18\ d$, vorzugsweise mit $0.12\ d \leq T_1 \leq 0.15\ d$, wobei d den Kolbendurchmesser angibt.

9.  Verfahren zur Bildung eines Kraftstoff-Luft-Gemisches unter Verwendung einer Einspritzeinrichtung und eines Kolbens (1) nach einem der vorherigen Ansprüche, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden (3) des Kolbens (1) und ein Zylinderrohr mitbegrenzt wird,
    **dadurch gekennzeichnet, daß**
    mittels der Einspritzeinrichtung ein kegelförmiger Einspritzstrahl ausgebildet wird, der einen Öffnungswinkel $\gamma$ aufweist mit $105° \leq \gamma \leq 130°$, und

    ■ der Einspritzzeitpunkt mindestens einer Einspritzung in der Art gewählt wird, dass der Einspritzstrahl im wesentlichen tangential auf den Bereich der Muldenoberfläche (5), der zwischen dem konkaven Bereich (8) und der Kolbenlängsachse (2) angeordnet ist, gelenkt wird.

10. Verfahren nach Anspruch 9,
    **dadurch gekennzeichnet, daß**
    der eingespritzte Kraftstoff vor dem Auftreffen auf die Muldenoberfläche (5) weitestgehend verdampft wird.

11. Verfahren nach Anspruch 9 oder 10,
    **dadurch gekennzeichnet, daß**
    im Rahmen eines Ladungswechsels eine Rückführung von Abgas (AGR) in den Brennraum der Brennkraftmaschine vorgenommen wird mit einer AGR-Rate bis zu 65%.

12. Verfahren nach einem der Ansprüche 9 bis 11,

**dadurch gekennzeichnet, daß**
im Rahmen eines Ladungswechsels im Brennraum der Brennkraftmaschine ein Drall ausgebildet wird mit einer Drallzahl DZ, für die gilt: $0.5 \leq DZ \leq 1.5$, vorzugsweise $0.8 \, d \leq DZ \leq 1.2$.

**13.** Verfahren nach einem der Ansprüche 9 bis 12, **dadurch gekennzeichnet, daß** zur Ausbildung des kegelförmigen Einspritzstrahls fünf bis zehn Teilstrahlen (9) verwendet werden.

**Claims**

**1.** Piston (1) having a piston crown (3) and having a piston depression (4) provided in the piston crown (3), in particular for an internal combustion engine which permits operation in two different operating modes, which piston - during operation of the internal combustion engine - is movable in translatory fashion along a piston longitudinal axis (2) and in which piston the piston depression (4) has a concave region (8) so as to realize an omega-shaped basic form, wherein

- the depression surface (5), facing toward the piston longitudinal axis (2), of the omega-shaped piston depression (4) has a substantially cylindrical partial region (7) which is oriented along the piston longitudinal axis (2), which merges into the piston crown (3) so as to form a convex depression edge (6), and which has a height $T_2$ where $T_2 \geq 0.025 \, d$, wherein d denotes the piston diameter, and
- the convex depression edge (6) has a radius of curvature $r_2$ where $r_2 \leq 0.006 \, d$, wherein d denotes the piston diameter,
**characterized in that**
- the depression surface (5) of the piston depression (4) has a frustoconical partial region (10) between the concave region (8) and the substantially cylindrical partial region (7), wherein said frustoconical partial region (10) is oriented along the piston longitudinal axis (2) and the depression surface (5) formed by said frustoconical partial region (10) forms an angle $\alpha_2$ with the piston longitudinal axis (2), where $\alpha_2 \leq 23°$.

**2.** Piston (1) according to Claim 1, **characterized in that** the substantially cylindrical partial region (7) has a height $T_2$ where $T_2 \geq 0.0265 \, d$, preferably where $0.0277 \, d \leq T_2 \leq 0.03 \, d$, wherein d denotes the piston diameter.

**3.** Piston (1) according to Claim 1 or 2, **characterized in that**, for the angle $\alpha_2$, the following applies: $\alpha_2 \leq 17°$.

**4.** Piston (1) according to one of the preceding claims, **characterized in that** the concave region (8) at least partially has a radius of curvature $r_1$ where $0.045 \, d \leq r_1 \leq 0.078 \, d$, preferably where $0.055 \, d \leq r_1 \leq 0.068 \, d$, wherein d denotes the piston diameter.

**5.** Piston (1) according to one of the preceding claims, **characterized in that** the depression surface (5) rises, with an associated decrease in depression depth, from the concave region (8) in the direction of the piston longitudinal axis (2).

**6.** Piston (1) according to Claim 5, **characterized in that** the depression surface (5), at least in one partial region, rises rectilinearly so as to form an angle $\alpha_1$ with the piston longitudinal axis (2), wherein $60° \leq \alpha_1 \leq 80°$, preferably $65° \leq \alpha_1 \leq 75°$.

**7.** Piston (1) according to one of the preceding claims, **characterized in that** the piston depression (4) has a maximum diameter $D_1$ where $0.54 \, d \leq D_1 \leq 0.84 \, d$, preferably where $0.64 \, d \leq D_1 \leq 0.74 \, d$, wherein d denotes the piston diameter and the maximum diameter exists in the region of the concave region (8).

**8.** Piston (1) according to one of the preceding claims, **characterized in that** the piston depression (4) has a maximum depth $T_1$ where $0.1 \, d \leq T_1 \leq 0.18 \, d$, preferably where $0.12 \, d \leq T_1 \leq 0.15 \, d$, wherein d denotes the piston diameter.

**9.** Method for forming a fuel-air mixture using an injection device and a piston (1) according to one of the preceding claims, in which method at least one injection of fuel directly into the combustion chamber of an internal combustion engine is performed by means of the injection device, wherein the combustion chamber is jointly delimited by the piston crown (3) of the piston (1) and by a cylinder barrel, **characterized in that**, by means of the injection device, a conical injection jet is formed which has an opening angle $\gamma$ where $105° \leq \gamma \leq 130°$, and the injection time of at least one injection is selected such that the injection jet is directed substantially tangentially onto that region of the depression surface (5) which is arranged between the concave region (8) and the piston longitudinal axis (2).

**10.** Method according to Claim 9, **characterized in that** the injected fuel is substantially evaporated before it impinges on the depression surface (5).

11. Method according to Claim 9 or 10, **characterized in that**, during the course of a charge exchange, a recirculation of exhaust gas (EGR) into the combustion chamber of the internal combustion engine is performed with an EGR rate of up to 65%.

12. Method according to one of Claims 9 to 11, **characterized in that**, during the course of a charge exchange, swirl is generated in the combustion chamber of the internal combustion engine with a swirl number DZ for which the following applies: $0.5 \leq DZ \leq 1.5$, preferably $0.8 \leq DZ \leq 1.2$.

13. Method according to one of Claims 9 to 12, **characterized in that** five to ten component jets (9) are used to form the conical injection jet.

**Revendications**

1. Piston (1) comprenant un fond de piston (3) et une cavité de piston (4) prévue dans le fond de piston (3), en particulier pour un moteur à combustion interne qui permet un fonctionnement dans deux modes de fonctionnement différents, lequel, lors du fonctionnement du moteur à combustion interne, est mobile en translation le long d'un axe longitudinal du piston (2) et dans lequel la cavité de piston (4), pour former une forme de base en forme d'oméga, présente une région concave (8),

- la surface de cavité (5), tournée vers l'axe longitudinal du piston (2), de la cavité de piston (4) en forme d'oméga comprenant une région partielle (7) essentiellement cylindrique qui est orientée le long de l'axe longitudinal du piston (2), se prolonge par le fond de piston (3) en formant un bord de cavité convexe (6) et présente une hauteur $T_2$ avec $T_2 \geq 0,025$ d, d indiquant le diamètre du piston et
- le bord de cavité convexe (6) présentant un rayon de courbure $r_2$ avec $r_2 \leq 0,006$ d, d indiquant le diamètre du piston,
**caractérisé en ce que**
- la surface de cavité (5) de la cavité de piston (4) comprend une région partielle (10) de forme tronconique entre la région concave (8) et la région partielle (7) essentiellement cylindrique, cette région partielle (10) de forme tronconique étant orientée le long de l'axe longitudinal du piston (2) et la surface de cavité (5) formée par cette région partielle (10) de forme tronconique formant avec l'axe longitudinal du piston (2) un angle $\alpha_2$ avec $\alpha_2 \leq 23°$.

2. Piston (1) selon la revendication 1, **caractérisé en ce que** la région partielle (7) essentiellement cylindrique présente une hauteur $T_2$ avec $T_2 \geq 0,0265$ d, de préférence avec $0,0277$ d $\leq T_2 \leq 0,03$ d, d indiquant le diamètre du piston.

3. Piston (1) selon la revendication 1 ou 2, **caractérisé en ce que** pour l'angle $\alpha_2$ on a : $\alpha_2 \leq 17°$.

4. Piston (1) selon l'une quelconque des revendications précédentes, **caractérisé en ce que** la région concave (8) présente au moins partiellement un rayon de courbure $r_1$ avec $0,045$ d $\leq r_1 \leq 0,078$ d, de préférence avec $0,055$ d $\leq r_1 \leq 0,068$ d, d indiquant le diamètre du piston.

5. Piston (1) selon l'une quelconque des revendications précédentes, **caractérisé en ce que** la surface de cavité (5) s'élève à partir de la région concave (8) en direction de l'axe longitudinal du piston (2), avec réduction de la profondeur de la cavité.

6. Piston (1) selon la revendication 5, **caractérisé en ce que** la surface de cavité (5) s'élève de manière rectiligne au moins dans une région partielle en formant un angle $\alpha_1$ avec l'axe longitudinal du piston (2), avec $60° \leq \alpha_1 \leq 80°$, de préférence avec $65° \leq \alpha_1 \leq 75°$.

7. Piston (1) selon l'une quelconque des revendications précédentes, **caractérisé en ce que** la cavité de piston (4) présente un diamètre maximal $D_1$ avec $0,54$ d $\leq D_1 \leq 0,84$ d, de préférence avec $0,64$ d $\leq D_1 \leq 0,74$ d, d indiquant le diamètre du piston et le diamètre maximal étant présent dans la zone de la région concave (8).

8. Piston (1) selon l'une quelconque des revendications précédentes, **caractérisé en ce que** la cavité de piston (4) présente une profondeur maximale $T_1$ avec $0,1$ d $\leq T_1 \leq 0,18$ d, de préférence avec $0,12$ d $\leq T_1 \leq 0,15$ d, d indiquant le diamètre du piston.

9. Procédé de formation d'un mélange air-carburant en utilisant un dispositif d'injection et un piston (1) selon l'une quelconque des revendications précédentes, au moins une injection de carburant étant effectuée directement dans la chambre de combustion d'un moteur à combustion interne au moyen du dispositif d'injection, la chambre de combustion étant limitée conjointement par le fond de piston (3) du piston (1) et par un tube cylindrique,

**caractérisé en ce**
**qu'**un jet d'injection conique est réalisé au moyen du dispositif d'injection, lequel jet d'injection présente un angle d'ouverture γ avec 105° ≤ γ ≤ 130° et

• le point d'injection d'au moins une injection est choisi de manière à ce que le jet d'injection soit dirigé essentiellement tangentiellement à la zone de la surface de cavité (5) qui est disposée entre la région concave (8) et l'axe longitudinal du piston (2).

10. Procédé selon la revendication 9,
**caractérisé en ce que**
le carburant injecté est vaporisé dans une très large mesure avant son impact sur la surface de cavité (5).

11. Procédé selon la revendication 9 ou 10,
**caractérisé en ce que**,
dans le cadre d'un changement de la charge, une recirculation des gaz d'échappement (REG) est effectuée dans la chambre de combustion du moteur à combustion interne avec un taux de recirculation des gaz d'échappement jusqu'à 65%.

12. Procédé selon l'une quelconque des revendications 9 à 11,
**caractérisé en ce que**,
dans le cadre d'un changement de la charge, une turbulence est réalisée dans la chambre de combustion du moteur à combustion interne avec un nombre de swirl DZ pour lequel l'on a : $0,5 \leq DZ \leq 1,5$, de préférence $0,8 \leq DZ \leq 1,2$.

13. Procédé selon l'une quelconque des revendications 9 à 12,
**caractérisé en ce que**
cinq à dix jets partiels (9) sont utilisés pour former le jet d'injection conique.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 6390054 B1